# EUROPEAN PATENT APPLICATION

(11) **EP 4 660 042 A1**
(43) Date of publication of application: **10.12.2025**
(21) Application number: 23924904.8
(22) Date of filing: 15.09.2023
(51) Int. Cl.: B60W 50/02, B60W 60/00

(54) **INTELLIGENT DRIVING METHOD, AND APPARATUS**

(30) Priority: 27.02.2023 CN 202310226080
(71) Applicant: Shenzhen Yinwang Intelligent Technologies Co., Ltd., Shenzhen, Guangdong 518110 (CN)
(72) Inventor: CAI, Hengyi, Shenzhen, Guangdong 518129 (CN); LI, Hongye, Shenzhen, Guangdong 518129 (CN); CHEN, Yongshang, Shenzhen, Guangdong 518129 (CN); WANG, Xinyu, Shenzhen, Guangdong 518129 (CN)
(74) Representative: Gill Jennings & Every LLP
(86) International application number: PCT/CN2023/119044
(87) International publication number: WO 2024/178949

(57) **Abstract**

This application provides an intelligent driving method and apparatus, and relates to the field of intelligent driving, so that when a sensor is faulty, driving safety can be improved, and more comfortable autonomous driving experience can be implemented. The method includes: determining a confidence level of a sensing sector based on a fault condition of a sensor included in the sensing sector; determining, based on the confidence level, an execution strategy corresponding to an autonomous driving action; and executing the autonomous driving action according to the execution strategy.

## Description

This application claims priority to Chinese Patent Application No. 202310226080.1, filed with the China National Intellectual Property Administration on February 27, 2023 and entitled "INTELLIGENT DRIVING METHOD AND APPARATUS", which is incorporated herein by reference in its entirety.

### TECHNICAL FIELD

This application relates to the field of intelligent driving, and in particular, to an intelligent driving method and apparatus.

### BACKGROUND

Currently, a high-order autonomous driving vehicle usually depends on sensing information of a plurality of sensors that are of various types to obtain information about the vehicle and another vehicle, to perform decision-making, strategy planning, and the like of autonomous driving, so as to implement safe autonomous driving. However, when the sensor is faulty, in a current processing method, some or all control rights (such as a lateral control right and a longitudinal control right) of the vehicle are directly handed over to a driver. This is not conducive to driving safety, and affects autonomous driving experience of a user.

### SUMMARY

This application provides an intelligent driving method and apparatus, so that when a sensor is faulty, driving safety can be improved, and more comfortable autonomous driving experience can be implemented.

To achieve the foregoing objective, this application uses the following technical solutions.

According to a first aspect, an intelligent driving method is provided. The method includes: determining a confidence level of a sensing sector based on a fault condition of a sensor included in the sensing sector; determining, based on the confidence level, an execution strategy corresponding to an autonomous driving action; and executing the autonomous driving action according to the execution strategy.

Based on the foregoing technical solution, the confidence level of the sensing sector is determined based on the fault condition of the sensor included in the sensing sector, and the execution strategy corresponding to the autonomous driving action is determined based on the confidence level, to execute the autonomous driving action according to the execution strategy. Execution of an autonomous driving action that depends on a sensing sector whose confidence level does not meet a preset condition can be avoided, so that a case in which some or all control rights of a vehicle are suddenly handed over to a driver at a risk moment at which the sensor is faulty can be avoided, and driving safety can be improved. In addition, an autonomous driving function of the vehicle can be kept at a high level to a greatest extent, and duration for which the vehicle is in autonomous driving work is prolonged, to implement more comfortable autonomous driving experience.

In a possible design, before the determining a confidence level of a sensing sector based on a fault condition of a sensor included in the sensing sector, the method further includes: obtaining at least one sensing sector through division based on a sensing orientation of at least one sensor. Based on this design, the sensing sector is divided based on the sensing orientation of the sensor, so that an obtained sensing sector is an effective sensing sector. In other words, the sensing sector may be used to obtain sensing information required for autonomous driving. In this way, when the sensor is faulty, driving safety can be further improved, and more comfortable autonomous driving experience can be further implemented.

In a possible design, the sensing sector includes one or more of the following: a front sensing sector, a left-front sensing sector, a right-front sensing sector, a rear sensing sector, a left-rear sensing sector, and a right-rear sensing sector. Based on this design, a sensing orientation of the existing sensor is considered, to divide the sensing sector into the foregoing sensing sectors, so that complexity of sensing sector division can be reduced, and the sensing sector obtained through division is an effective sensing sector, that is, the sensing sector may be used to obtain the sensing information required for autonomous driving. In this way, when the sensor is faulty, driving safety can be further improved, and more comfortable autonomous driving experience can be further implemented.

In a possible design, the execution strategy includes one or more of the following: allowing execution of the autonomous driving action, prohibiting execution but allowing completion of execution of an autonomous driving action that has started, and prohibiting execution and disallowing completion of execution of the autonomous driving action that has started. Based on this design, when the sensing sector is at different confidence levels, the autonomous driving action corresponds to different execution strategies, for example, allowing execution of the autonomous driving action, prohibiting execution but allowing completion of execution of the autonomous driving action that has started, or prohibiting execution and disallowing completion of execution of the autonomous driving action that has started. In this way, execution of the autonomous driving action that depends on the sensing sector whose confidence level does not meet the preset condition is avoided, so that the case in which some or all control rights of the vehicle are suddenly handed over to the driver at the risk moment at which the sensor is faulty can be avoided, and driving safety can be improved. In addition, the autonomous driving function of the vehicle can be kept at the high level to a greatest extent, to implement more comfortable autonomous driving experience.

In addition, for a case in which a sensor fault occurs in an execution process of the autonomous driving action, execution is prohibited but completion of execution of the autonomous driving action that has started is allowed. In this way, after completion of execution of the autonomous driving action of the preset type, execution of the autonomous driving action is prohibited, so that execution of the autonomous driving action that depends on the sensing sector whose confidence level does not meet the preset condition can be avoided. In addition, a case in which the vehicle is left at a dangerous position due to sudden termination of the autonomous driving action can be further avoided, so that driving safety is further improved, and more comfortable autonomous driving experience is implemented.

Alternatively, execution is prohibited and completion of execution of the autonomous driving action that has started is disallowed. In this way, the autonomous driving action is directly terminated, so that execution of the autonomous driving action that depends on the sensing sector whose confidence level does not meet the preset condition can be avoided early to a greatest extent, driving safety is further improved, and more comfortable autonomous driving experience is implemented.

In a possible design, sensing information of the sensor included in the sensing sector is used to execute the autonomous driving action. The determining, based on the confidence level, an execution strategy corresponding to an autonomous driving action includes: If the confidence level does not meet the preset condition, the execution strategy corresponding to the autonomous driving action includes prohibiting execution but allowing completion of execution of the autonomous driving action that has started, or prohibiting execution and disallowing completion of execution of the autonomous driving action that has started.

Based on this design, when sensing information of one sensing sector is used to execute a specific autonomous driving action, if a confidence level of the sensing sector does not meet the preset condition, an execution strategy corresponding to the autonomous driving action is prohibiting execution but allowing completion of execution of the autonomous driving action that has started, or prohibiting execution and disallowing completion of execution of the autonomous driving action that has started. In other words, execution of the autonomous driving action is prohibited. In this way, execution of the autonomous driving action that depends on the sensing sector whose confidence level does not meet the preset condition is avoided, so that the case in which the control rights of the vehicle are suddenly handed over to the driver at the risk moment at which the sensor is faulty can be avoided, and driving safety can be improved. In addition, the autonomous driving function of the vehicle can be kept at the high level to a greatest extent, to implement more comfortable autonomous driving experience.

In a possible design, the autonomous driving action includes one or more of the following: single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, and exiting a parking space.

In a possible design, the sensing sector is the front sensing sector. The determining, based on the confidence level, an execution strategy corresponding to an autonomous driving action includes: If the confidence level does not meet the preset condition, an execution strategy corresponding to single-lane cruising, detouring to the left, detouring to the right, exiting to the left, exiting to the right, traveling straight at an intersection, parking into a parking space, or exiting a parking space is: prohibiting execution and disallowing completion of execution of the autonomous driving action that has started, and an execution strategy corresponding to merging in to the left, merging in to the right, changing a lane to the left, changing a lane to the right, borrowing a left lane, borrowing a right lane, turning left at an intersection, turning right at an intersection, or making a U-turn at an intersection is prohibiting execution but allowing completion of execution of the autonomous driving action that has started.

In a possible design, the sensing sector is the right-rear sensing sector. The determining a confidence level of a sensing sector based on a fault condition of a sensor included in the sensing sector includes: in a case in which a right-rear visual sensor is faulty, determining that a confidence level of the right-rear sensing sector does not meet the preset condition, where the right-rear visual sensor is a sensor included in the right-rear sensing sector.

In a possible design, the autonomous driving action includes changing a lane to the right, and the execution strategy includes prohibiting execution but allowing completion of execution of the autonomous driving action that has started.

In a possible design, the sensor includes one or more of the following: a camera, a millimeter-wave radar, an ultrasonic radar, and a lidar.

In a possible design, after the executing the autonomous driving action according to the execution strategy, the method further includes: if it is determined that an autonomous driving task is unable to be completed, lowering a level of an autonomous driving function.

Based on this design, after the autonomous driving action is executed according to the execution strategy, if it is determined that the autonomous driving task is unable to be completed, the level of the autonomous driving function is lowered. In this way, driving safety can be ensured, and more comfortable autonomous driving experience can be implemented.

In a possible design, after the executing the autonomous driving action according to the execution strategy, the method further includes: if it is determined that an autonomous driving task is able to be completed, maintaining a level of an autonomous driving function. Based on this design, after the autonomous driving action is executed according to the execution strategy, if it is determined that the autonomous driving task is able to be completed, the level of the autonomous driving function is maintained. In this way, the autonomous driving function of the vehicle can be kept at the high level to a greatest extent, to implement more comfortable autonomous driving experience.

According to a second aspect, an intelligent driving apparatus is provided, including a processing unit. The processing unit is configured to: determine a confidence level of a sensing sector based on a fault condition of a sensor included in the sensing sector; determine, based on the confidence level, an execution strategy corresponding to an autonomous driving action; and execute the autonomous driving action according to the execution strategy.

In a possible design, the processing unit is further configured to obtain at least one sensing sector through division based on a sensing orientation of at least one sensor.

In a possible design, the sensing sector includes one or more of the following: a front sensing sector, a left-front sensing sector, a right-front sensing sector, a rear sensing sector, a left-rear sensing sector, and a right-rear sensing sector.

In a possible design, the execution strategy includes one or more of the following: allowing execution of the autonomous driving action, prohibiting execution but allowing completion of execution of an autonomous driving action that has started, and prohibiting execution and disallowing completion of execution of the autonomous driving action that has started.

In a possible design, sensing information of the sensor included in the sensing sector is used to execute the autonomous driving action. The processing unit is specifically configured to: if the confidence level does not meet a preset condition, determine that the execution strategy corresponding to the autonomous driving action includes prohibiting execution but allowing completion of execution of the autonomous driving action that has started, or prohibiting execution and disallowing completion of execution of the autonomous driving action that has started.

In a possible design, the autonomous driving action includes one or more of the following: single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, and exiting a parking space.

In a possible design, the sensing sector is the front sensing sector, and the processing unit is specifically configured to: if the confidence level does not meet the preset condition, determine that an execution strategy corresponding to single-lane cruising, detouring to the left, detouring to the right, exiting to the left, exiting to the right, traveling straight at an intersection, parking into a parking space, or exiting a parking space is: prohibiting execution and disallowing completion of execution of the autonomous driving action that has started, and an execution strategy corresponding to merging in to the left, merging in to the right, changing a lane to the left, changing a lane to the right, borrowing a left lane, borrowing a right lane, turning left at an intersection, turning right at an intersection, or making a U-turn at an intersection is prohibiting execution but allowing completion of execution of the autonomous driving action that has started.

In a possible design, the sensing sector is the right-rear sensing sector, and the processing unit is specifically configured to: in a case in which a right-rear visual sensor is faulty, determine that a confidence level of the right-rear sensing sector does not meet the preset condition, where the right-rear visual sensor is a sensor included in the right-rear sensing sector.

In a possible design, the autonomous driving action includes changing a lane to the right, and the execution strategy includes prohibiting execution but allowing completion of execution of the autonomous driving action that has started.

In a possible design, the sensor includes one or more of the following: a camera, a millimeter-wave radar, an ultrasonic radar, and a lidar.

In a possible design, the processing unit is further configured to: if it is determined that an autonomous driving task is unable to be completed, lower a level of an autonomous driving function.

In a possible design, the processing unit is further configured to: if it is determined that an autonomous driving task is able to be completed, maintain a level of an autonomous driving function.

According to a third aspect, an intelligent driving apparatus is provided, including a processor. The processor is coupled to a memory, and the processor is configured to execute a computer program stored in the memory, to enable the intelligent driving apparatus to perform the method according to the first aspect and any one of the designs of the first aspect. Optionally, the memory may be coupled to the processor, or may be independent of the processor.

In a possible design, the intelligent driving apparatus further includes a communication interface, and the communication interface may be used by the intelligent driving apparatus to communicate with another apparatus. For example, the communication interface may be a transceiver, an input/output interface, an interface circuit, an output circuit, an input circuit, a pin, a related circuit, or the like.

The intelligent driving apparatus in the second aspect or the third aspect may be a computing platform in an intelligent driving system, and the computing platform may be an in-vehicle computing platform or a cloud computing platform.

According to a fourth aspect, a computer-readable storage medium is provided. The computer-readable storage medium includes a computer program or instructions. When the computer program or the instructions are run on an intelligent driving apparatus, the intelligent driving apparatus is enabled to perform the method according to the first aspect and any one of the designs of the first aspect.

According to a fifth aspect, a computer program product is provided. The computer program product includes a computer program or instructions. When the computer program or the instructions are run on a computer, the computer is enabled to perform the method according to the first aspect and any one of the designs of the first aspect.

According to a sixth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect and any one of the designs of the first aspect.

It should be noted that, for technical effect brought by any one of the designs of the second aspect to the sixth aspect, refer to technical effect brought by a corresponding design of the first aspect. Details are not described herein again.

### BRIEF DESCRIPTION OF DRAWINGS

FIG. 1 is a diagram of a structure of a target device according to an embodiment of this application;
FIG. 2 is a diagram of a structure of another target device according to an embodiment of this application;
FIG. 3 is a schematic flowchart of an intelligent driving method according to an embodiment of this application;
FIG. 4 is a diagram of sensing sectors according to an embodiment of this application;
FIG. 5 is a diagram of other sensing sectors according to an embodiment of this application;
FIG. 6 is a diagram of a scenario of an autonomous driving action according to an embodiment of this application;
FIG. 7 is a diagram of a mapping relationship according to an embodiment of this application;
FIG. 8 is a diagram of another mapping relationship according to an embodiment of this application;
FIG. 9 is a schematic flowchart of another intelligent driving method according to an embodiment of this application;
FIG. 10 is a diagram of a structure of an intelligent driving apparatus according to an embodiment of this application; and
FIG. 11 is a diagram of a structure of a chip system according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. The expression "at least one of the following items (pieces)" or a similar expression thereof indicates any combination of these items, including a single item (piece) or any combination of a plurality of items (pieces). For example, at least one of a, b, or c may represent: a, b, c, a and b, a and c, b and c, and a and b and c, where a, b, and c may be singular or plural.

In addition, to clearly describe the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference.

In embodiments of this application, a word such as "example" or "for example" is used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that features, structures, or characteristics in this application may be combined in one or more embodiments in any proper manner. Sequence numbers of the foregoing processes do not mean execution sequences in embodiments of this application. The execution sequences of the processes should be determined according to functions and internal logic of the processes, and should not be construed as any limitation on the implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for same or similar parts of embodiments, refer to each other. In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment. The foregoing implementations of this application are not intended to limit the protection scope of this application.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that with the evolution of the network architecture and the emergence of new service scenarios, the technical solutions provided in embodiments of this application are also applicable to similar technical problems.

Currently, a high-order autonomous driving vehicle usually depends on sensing information of a plurality of sensors that are of various types to obtain information about the vehicle and another vehicle, to perform decision-making, strategy planning, and the like of autonomous driving, so as to implement safe autonomous driving. However, when the sensor is faulty, in a current processing method, a control right of the vehicle is directly handed over to a driver, or the vehicle directly exits an autonomous driving mode. This is not conducive to driving safety, and affects autonomous driving experience of a user.

Based on this, an embodiment of this application provides an intelligent driving method, so that when a sensor is faulty, driving safety can be improved, and more comfortable autonomous driving experience can be implemented.

The intelligent driving method provided in this embodiment of this application may be applied to a target device including a plurality of sensors that are of various types. For example, the target device may include but is not limited to an intelligent vehicle, an artificial intelligence (AI) device (such as a robot), a smart home device, a smart city device, a vehicle-mounted device, an industrial remote control device, and the like. Alternatively, the intelligent driving method is applied to another device (for example, a cloud server or a mobile phone terminal) that has a function of controlling the foregoing target device. The target device or the another device may implement, by using components (including hardware and software) included in the target device or the another device, the intelligent driving method provided in this embodiment of this application.

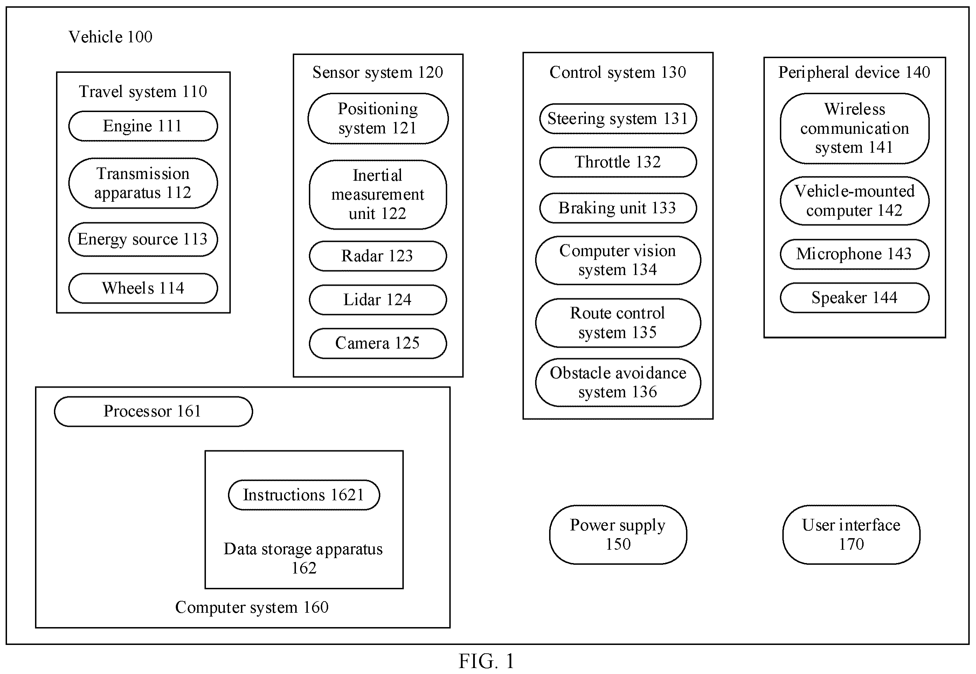

For example, the target device is a vehicle. FIG. 1 is a functional block diagram of a vehicle 100 according to an embodiment of this application.

The vehicle 100 may include various subsystems, such as a travel system 110, a sensor system 120, a control system 130, one or more peripheral devices 140, a power supply 150, a computer system 160, and a user interface 170. Optionally, the vehicle 100 may include more or fewer subsystems, and each subsystem may include a plurality of components. In addition, each subsystem and component of the vehicle 100 may be interconnected in a wired or wireless manner.

The travel system 110 includes a component providing power to the vehicle 100 for moving. In an embodiment, the travel system 110 may include an engine 111, a transmission apparatus 112, an energy source 113, and wheels 114. The engine 111 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 111 converts the energy source 113 into mechanical energy.

Examples of the energy source 113 include gasoline, diesel, another oil-based fuel, propane, another compressed gas-based fuel, ethanol, a solar panel, a battery, and another power source. The energy source 113 may also provide energy for another system of the vehicle 100.

The transmission apparatus 112 may transmit mechanical power from the engine 111 to the wheels 114. The transmission apparatus 112 may include a gearbox, a differential, and a drive shaft. In an embodiment, the transmission apparatus 112 may further include another device, such as a clutch. The drive shaft may include one or more shafts that may be coupled to one or more wheels 114.

The sensor system 120 may include several sensors that sense information about an ambient environment of the vehicle 100. For example, the sensor system 120 includes one or more of a positioning system 121 (the positioning system may be a global positioning system (GPS), a BeiDou system, or another positioning system), an inertia measurement unit (IMU) 122, a radar 123, a lidar 124, a camera 125 (or referred to as camera lens 125 or a visual sensor 125), and the like. For example, the radar 123 may include but is not limited to various types of radars such as a millimeter-wave radar and an ultrasonic radar. The camera 125 may include but is not limited to various types of cameras such as a long-range camera, a medium-range camera, a short-range camera, a fisheye camera, a monocular camera, a binocular camera, and a multiocular camera. Sensor data from one or more of these sensors may be used to detect an object and corresponding features (a position, a shape, a direction, a speed, and the like) of the object. Such detection and recognition are a key function of a safe operation of autonomous driving of the vehicle 100.

In some embodiments of this application, several sensors included in the sensor system 120 may be deployed at different positions of the vehicle 100, for example, including but not limited to front of the vehicle, a vehicle body, rear of the vehicle, and the like, to collect sensing information of different orientations of the vehicle.

The control system 130 may control operations of the vehicle 100 and components of the vehicle 100. The control system 130 may include various elements, including a steering system 131, a throttle 132, a braking unit 133, a computer vision system 134, a route control system 135, and an obstacle avoidance system 136.

The steering system 131 is operable to adjust an advancing direction of the vehicle 100. For example, in an embodiment, the steering system may be a steering wheel system.

The throttle 132 is configured to control an operating speed of the engine 111, to further control a speed of the vehicle 100.

The braking unit 133 is configured to control the vehicle 100 to decelerate.

The computer vision system 134 may process and analyze an image captured by the camera 125, to recognize an object and/or a feature in the ambient environment of the vehicle 100 and a body feature and a facial feature of a driver in a vehicle driving cabin. The object and/or the feature may include a traffic signal, a road condition, and an obstacle, and the body feature and the facial feature of the driver include a behavior, a line of sight, an expression, and the like of the driver.

The route control system 135 is configured to determine a traveling route of the vehicle 100. In some embodiments, the route control system 135 may determine the traveling route of the vehicle 100 with reference to data from the sensor, the positioning system 121, and one or more predetermined maps.

The obstacle avoidance system 136 is configured to identify, evaluate, and avoid or otherwise bypass a potential obstacle in an environment of the vehicle 100.

Certainly, in an instance, the control system 130 may additionally or alternatively include a component other than those shown and described. Alternatively, some of the foregoing components may be removed.

The vehicle 100 interacts with an external sensor, another vehicle, another computer system, or a user by using the peripheral device 140. The peripheral device 140 may include a wireless communication system 141, a vehicle-mounted computer 142, a microphone 143, and/or a speaker 144. In some embodiments, the peripheral device 140 provides a means for the user of the vehicle 100 to interact with the user interface 170.

The wireless communication system 141 may wirelessly communicate with one or more devices directly or through a communication network.

The power supply 150 may provide power to various components of the vehicle 100.

Some or all of functions of the vehicle 100 are controlled by the computer system 160. The computer system 160 may include at least one processor 161, and the processor 161 executes instructions 1621 stored in, for example, a data storage apparatus 162. The computer system 160 may be a plurality of computing devices that control an individual component or a subsystem of the vehicle 100 in a distributed manner.

The processor 161 may be any conventional processor, such as a CPU or an ASIC or another dedicated device of a hardware-based processor. Although FIG. 1 functionally shows a processor, a data storage apparatus, and other elements in a same physical housing, a person of ordinary skill in the art should understand that the processor, the computer system, or the data storage apparatus may actually include a plurality of processors, computer systems, or data storage apparatuses stored in a same physical housing, or include a plurality of processors, computer systems, or data storage apparatuses stored in different physical housings. For example, the data storage apparatus may be a hard disk drive or another storage medium located in a different physical housing. Therefore, references to the processor or the computer system will be understood as including references to a set of processors or computer systems or data storage apparatuses that can be operated in parallel, or references to a set of processors or computer systems or data storage apparatus that may not be operated in parallel. Different from using a single processor to perform the steps described herein, some components such as a steering component and a deceleration component may have respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 162 may include the instructions 1621 (for example, program logic), and the instructions 1621 may be executed by the processor 161 to perform various functions of the vehicle 100, including those functions described above. The data storage apparatus 162 may also include additional instructions, including instructions to send data to, receive data from, interact with, and/or control one or more of the travel system 110, the sensor system 120, the control system 130, and the peripheral device 140.

In addition to the instructions 1621, the data storage apparatus 162 may further store data, such as a road map, route information, a position, a direction, a speed, and other vehicle data of the vehicle, and other information. Such information may be used by the vehicle 100 and the computer system 160 when the vehicle 100 operates in an autonomous mode, a semi-autonomous mode, and/or a manual mode.

The user interface 170 is configured to provide information to or receive information from the user of the vehicle 100. Optionally, the user interface 170 may interact with one or more input/output devices in a set of peripheral devices 140, such as one or more of the wireless communication system 141, the vehicle-mounted computer 142, the microphone 143, and the speaker 144.

The computer system 160 may control the vehicle 100 based on information obtained from various subsystems (for example, the travel system 110, the sensor system 120, and the control system 130) and information received from the user interface 170.

Optionally, one or more of the foregoing components may be installed separately from or associated with the vehicle 100. For example, the data storage apparatus 162 may partially or completely exist separately from the vehicle 100. The foregoing components may be coupled together for communication in a wired and/or wireless manner.

Optionally, the foregoing components are merely examples. In actual application, components in the foregoing modules may be added or removed according to an actual requirement. FIG. 1 should not be construed as a limitation on embodiments of this application.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of this application.

For example, the foregoing uses only a vehicle as an example to describe a structure of the target device in this embodiment of this application, but does not constitute a limitation on the structure and a form of the target device. The structure and the form of the target device are not limited in embodiments of this application.

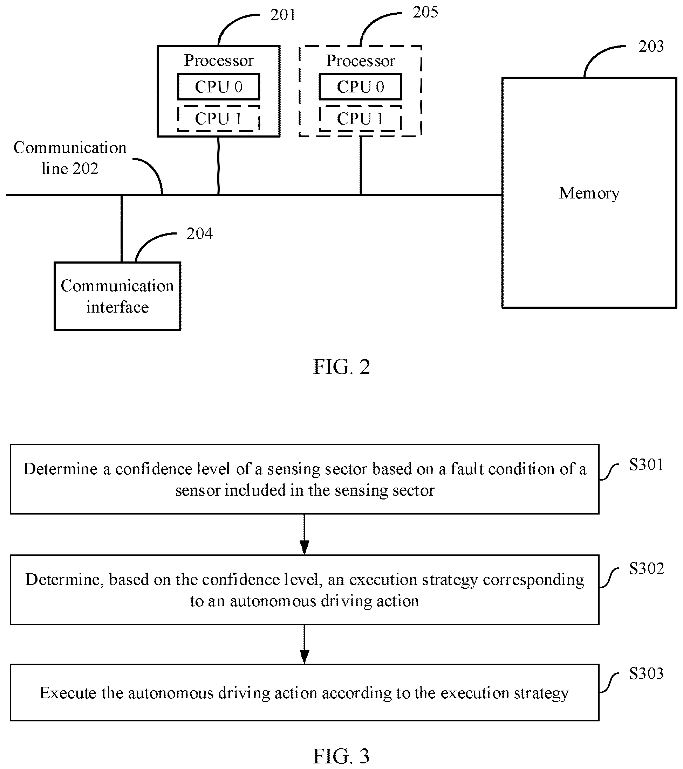

For example, the target device may alternatively be implemented by using a communication device shown in FIG. 2. FIG. 2 is a diagram of a structure of another target device according to an embodiment of this application. The target device includes at least one processor 201, a communication line 202, a memory 203, and at least one communication interface 204.

The processor 201 may be a general purpose CPU, a microprocessor, an ASIC, or one or more integrated circuits configured to control program execution of the solutions of this application.

The communication line 202 may include a path on which information is transferred between the foregoing components.

The communication interface 204 is configured to communicate with another device. In this embodiment of this application, the communication interface 204 may be a module, a circuit, a bus, an interface, a transceiver, or another apparatus that can implement a communication function. Optionally, when the communication interface is a transceiver, the transceiver may be an independently disposed transmitter, and the transmitter may be configured to send information to the another device. Alternatively, the transceiver may be an independently disposed receiver, and is configured to receive information from the another device. Alternatively, the transceiver may be a component that integrates functions of sending and receiving information. Specific implementation of the transceiver is not limited in embodiments of this application.

The memory 203 may be a read-only memory (ROM), another type of static storage device that can store static information and instructions, a random access memory (RAM), or another type of dynamic storage device that can store information and instructions; or may be an electrically erasable programmable read-only memory (EEPROM), a compact disc read-only memory (CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can carry or store expected program code in a form of instruction or data structure and that can be accessed by a computer, but is not limited thereto. The memory 203 may exist independently, and be connected to the processor 201 through the communication line 202. The memory 203 may alternatively be integrated with the processor 201.

The memory 203 is configured to store computer-executable instructions used to implement the solutions of this application. The processor 201 is configured to execute the computer-executable instructions stored in the memory 203, to implement a method provided in the following embodiments of this application.

Optionally, the computer-executable instructions in embodiments of this application may also be referred to as application program code, instructions, a computer program, or another name. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the target device may include a plurality of processors, for example, the processor 201 and a processor 205 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

The target device may be a general-purpose device or a dedicated device. A type of the target device is not limited in embodiments of this application.

In some other embodiments of this application, the target device may include more or fewer components than those shown in FIG. 1 and FIG. 2, or some components may be combined, or some components may be split, or some components may be replaced, or different component arrangements may be used. The components shown in the figure may be implemented by hardware, software, or a combination of software and hardware.

For example, FIG. 3 shows an intelligent driving method according to an embodiment of this application. The method may be performed by the target device described above, or may be performed by a processor in the target device. The method includes the following steps.

S301: Determine a confidence level of a sensing sector based on a fault condition of a sensor included in the sensing sector.

In some embodiments, the sensing sector may be obtained through division based on a sensing orientation of at least one sensor. Optionally, the sensing orientation of the sensor may be determined based on a deployment orientation of the sensor. For example, if the deployment orientation of the sensor is front, the sensing orientation of the sensor may also be front. Alternatively, if the deployment orientation of the sensor is front, the sensing orientation of the sensor may be left-front or the like.

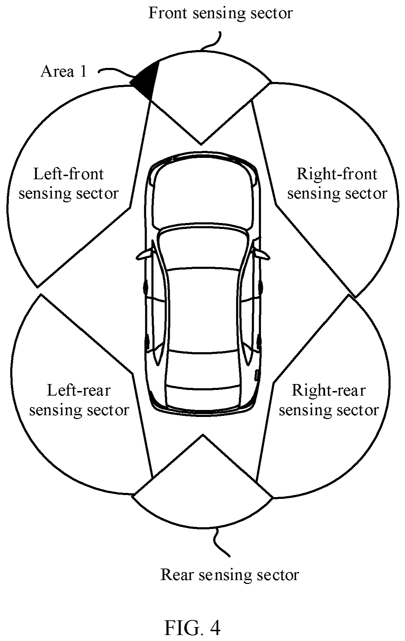

FIG. 4 is a diagram of sensing sectors according to an embodiment of this application by using an example in which sensing orientations of the sensor are front, left-front, right-front, rear, left-rear, and right-rear. As shown in FIG. 4, the sensing sector may include one or more of the following: a front sensing sector, a left-front sensing sector, a right-front sensing sector, a rear sensing sector, a left-rear sensing sector, and a right-rear sensing sector.

It may be understood that FIG. 4 shows an example in which a quantity of sensing sectors obtained through division is the same as a quantity of sensing orientations of the at least one sensor, and an orientation corresponding to the sensing sector is in a one-to-one correspondence with the sensing orientation of the at least one sensor. FIG. 4 is merely used as an example for description.

Optionally, the quantity of sensing sectors obtained through division may be different from the quantity of sensing orientations of the at least one sensor, and/or the orientation corresponding to the sensing sector may not be in a one-to-one correspondence with the sensing orientation of the at least one sensor. For example, the sensing orientations of the at least one sensor are front, left-front, right-front, rear, left-rear, and right-rear. The sensing sectors obtained through division may include one or more of the left-front sensing sector, the right-front sensing sector, the left-rear sensing sector, the right-rear sensing sector, and the like.

In some embodiments, the sensing sector may also be described as a sector, a sensing area, or another name. It may be understood that, in embodiments of this application, the "sensing sector" may be in a sector shape, or may be in another shape. This is not specifically limited in this application.

Optionally, in embodiments of this application, there may be one or more sensing sectors. Different sensing sectors may not overlap at all, or may partially overlap. FIG. 4 shows an example in which different sensing sectors partially overlap. As shown in FIG. 4, an area 1 is an overlapping area between the front sensing sector and the left-front sensing sector, and overlapping areas between other sensing sectors can be deduced by analogy.

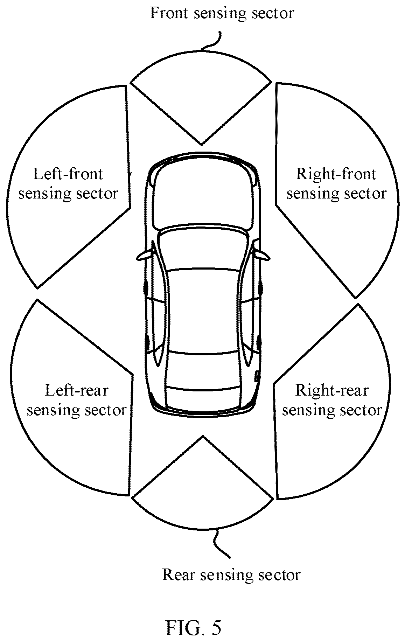

For example, FIG. 5 is a diagram of other sensing sectors according to an embodiment of this application. As shown in FIG. 5, a front sensing sector, a left-front sensing sector, a right-front sensing sector, a rear sensing sector, a left-rear sensing sector, and a right-rear sensing sector do not overlap at all.

Optionally, one sensing sector may include one or more sensors, and sensors included in different sensing sectors may be completely different or may partially overlap. For example, a sensing sector 1 includes a sensor 1, a sensor 2, and a sensor 3, and a sensing sector 2 includes the sensor 3, a sensor 4, a sensor 5, and the like. In this case, both the sensing sector 1 and the sensing sector 2 include the sensor 3. In other words, sensors included in the sensing sector 1 and the sensing sector 2 partially overlap. For another example, a sensing sector 3 includes a sensor 6 and a sensor 7, and a sensing sector 4 includes a sensor 8 and a sensor 9. In this case, sensors included in the sensing sector 3 and the sensing sector 4 are completely different.

For example, the sensor may include but is not limited to one or more of the following: a camera, a millimeter-wave radar, an ultrasonic radar, a lidar, and the like.

Optionally, types of sensors included in different sensing sectors may be partially or completely the same, or may be completely different. For example, a sensing sector 1 includes only a camera, and a sensing sector 2 includes only a lidar. In this case, types of sensors included in the sensing sector 1 and the sensing sector 2 are completely different. For another example, a sensing sector 3 includes a camera and a lidar, and a sensing sector 4 includes a lidar. In this case, types of sensors included in the sensing sector 3 and the sensing sector 4 are partially the same. For still another example, a sensing sector 5 includes only a camera, and a sensing sector 6 also includes only a camera. In this case, types of sensors included in the sensing sector 5 and the sensing sector 6 are completely the same.

It may be understood that the confidence level (or referred to as confidence) of the sensing sector may represent credibility of the sensing sector. In other words, the confidence level of the sensing sector may represent credibility (or referred to as accuracy) of sensing information obtained in the sensing sector, that is, credibility of sensing information collected by the sensor included in the sensing sector.

In a possible example, the confidence level of the sensing sector may include a high level and a low level. In another possible example, the confidence level of the sensing sector may include a high level, a medium level, a low level, and the like. It may be understood that a specific division manner of the confidence level of the sensing sector is not limited in embodiments of this application.

Optionally, for a same sensing sector, when different sensors included in the sensing sector are faulty, determined confidence levels of the sensing sector may be different or may be the same.

For example, sensor faults may include but are not limited to various types of faults such as sensor contamination, a random failure of a sensor system, and a program design failure.

For example, the confidence level of the sensing sector includes the high level and the low level. In a possible implementation, when a target quantity of sensors in the sensing sector are faulty, it is determined that the confidence level of the sensing sector is the low level (or low). Otherwise, it is determined that the confidence level of the sensing sector is the high level (or high). For example, the target quantity may be 50%, 60%, or another value, and the target quantity may be set by a developer according to an actual requirement.

In another possible implementation, when a sensor of a target type in the sensing sector is faulty, it is determined that the confidence level of the sensing sector is the low level. Otherwise, it is determined that the confidence level of the sensing sector is the high level. For example, the target type may be a camera, a lidar, or another sensor type, and the target type may also be set by the developer according to an actual requirement.

For example, the sensing sector is the right-rear sensing sector. In a case in which a right-rear visual sensor is faulty, it is determined that a confidence level of the right-rear sensing sector is low, where the right-rear visual sensor is a sensor included in the right-rear sensing sector. Optionally, for a same sensing sector, when different sensors in the sensing sector are faulty, determined confidence levels of the sensing sector may be the same or may be different.

In still another possible implementation, when the target quantity of sensors in the sensing sector are faulty, and all the target quantity of sensors are of the target type, it is determined that the confidence level of the sensing sector is the low level. Otherwise, it is determined that the confidence level of the sensing sector is the high level.

In yet another possible implementation, when one or more sensors in the sensing sector are faulty, and the sensing information of the sensing sector cannot be obtained based on the sensing information of the sensor in the sensing sector, or it is determined that accuracy of the sensing information of the sensing sector does not meet a preset accuracy condition (for example, is less than or equal to a preset accuracy threshold), it is determined that the confidence level of the sensing sector is the low level. Otherwise, it is determined that the confidence level of the sensing sector is the high level.

It may be understood that a manner of determining the confidence level of the sensing sector is not specifically limited in embodiments of this application.

S302: Determine, based on the confidence level, an execution strategy corresponding to an autonomous driving action.

In some embodiments, the autonomous driving action (or referred to as an autonomous driving operation) may include one or more of the following: single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, and exiting a parking space.

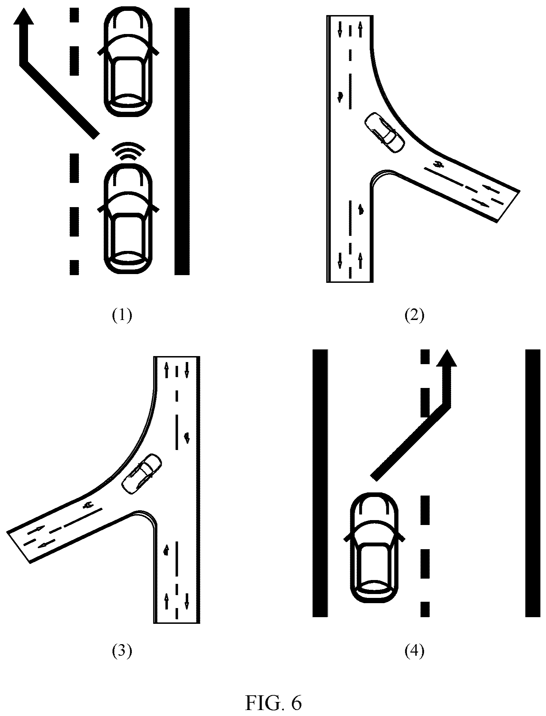

For example, (1) in FIG. 6 is a diagram of a scenario of detouring to the left according to an embodiment of this application. (2) in FIG. 6 is a diagram of a scenario of exiting to the left according to an embodiment of this application. (3) in FIG. 6 is a diagram of a scenario of merging in to the right according to an embodiment of this application. (4) in FIG. 6 is a diagram of a scenario of borrowing a right lane according to an embodiment of this application.

In some embodiments, the execution strategy may include one or more of the following: allowing execution of an autonomous driving action, disallowing (or referred to as prohibiting) execution of the autonomous driving action, and the like.

In some scenarios, a sensor fault may occur in a process of executing the autonomous driving action. Therefore, in some other embodiments, the execution strategy may include one or more of the following: allowing execution of the autonomous driving action, prohibiting execution but allowing completion of execution of an autonomous driving action that has started, and prohibiting execution and disallowing completion of execution of the autonomous driving action that has started.

It may be understood that, prohibiting execution but allowing completion of execution of the autonomous driving action that has started means prohibiting a specific autonomous driving action. However, if the sensor fault occurs in a process of executing the autonomous driving action, completion of execution of the autonomous driving action may be allowed. Then, after completion of execution of the autonomous driving action, the autonomous driving action is prohibited from being executed again.

Prohibiting execution and disallowing completion of execution of the autonomous driving action that has started means prohibiting a specific autonomous driving action. In addition, if the sensor fault occurs in a process of executing the autonomous driving action, completion of execution of the autonomous driving action is disallowed. In other words, execution of the autonomous driving action is immediately stopped, and subsequently, the autonomous driving action is prohibited from being executed again.

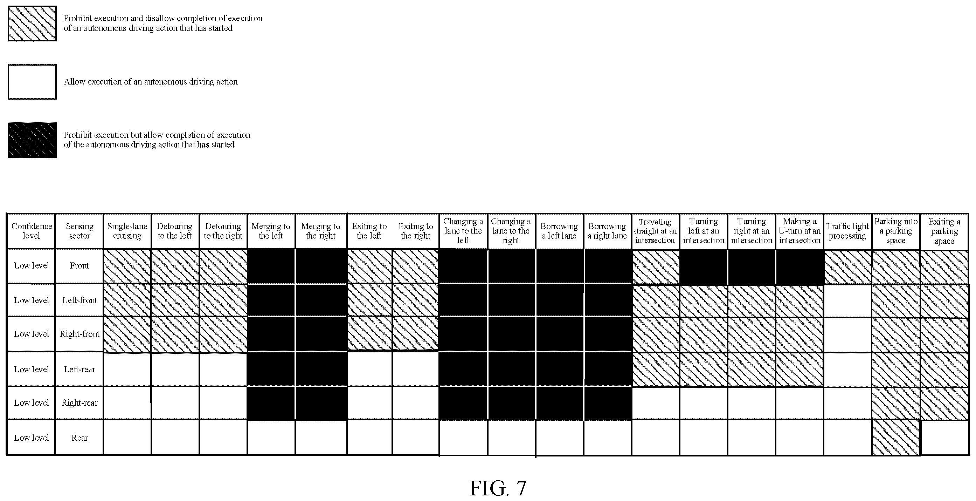

In some embodiments, there is a mapping relationship between a confidence level of a sensing sector, the autonomous driving action, and the execution strategy. For example, the sensing sector includes a front sensing sector, a left-front sensing sector, a right-front sensing sector, a rear sensing sector, a left-rear sensing sector, and a right-rear sensing sector, and confidence levels of these sensing sectors are low levels. FIG. 7 shows an example of the mapping relationship.

As shown in FIG. 7, for example, the sensing sector is the front sensing sector. When a confidence level of the front sensing sector is a low level, an execution strategy corresponding to single-lane cruising, detouring to the left, detouring to the right, exiting to the left, exiting to the right, traveling straight at an intersection, parking into a parking space, exiting a parking space, or the like is prohibiting execution and disallowing completion of execution of the autonomous driving action that has started. An execution strategy corresponding to merging in to the left, merging in to the right, changing a lane to the left, changing a lane to the right, borrowing a left lane, borrowing a right lane, turning left at an intersection, turning right at an intersection, making a U-turn at an intersection, or the like is prohibiting execution but allowing completion of execution of the autonomous driving action that has started.

Similarly, when a confidence level of another sensing sector is the low level, for execution strategies corresponding to different autonomous driving actions, refer to FIG. 7.

Optionally, for different sensing sectors, when confidence levels of these sensing sectors are all low levels, execution strategies corresponding to a same autonomous driving action may be different. As shown in FIG. 7, for example, for the front sensing sector and the rear sensing sector that are at the low level, for merging in to the left, an execution strategy corresponding to the front sensing sector is prohibiting execution but allowing completion of execution of the autonomous driving action that has started, and an execution strategy corresponding to the rear sensing sector is allowing execution of the autonomous driving action.

Optionally, when a confidence level of a sensing sector is the low level, execution strategies corresponding to different autonomous driving actions may also be different. As shown in FIG. 7, for example, when the confidence level of the front sensing sector is the low level, an execution strategy corresponding to borrowing a left lane is prohibiting execution but allowing completion of execution of the autonomous driving action that has started, and an execution strategy corresponding to traveling straight at an intersection is prohibiting execution and disallowing completion of execution of the autonomous driving action that has started.

In some embodiments, when sensing information of one sensing sector is used to execute a specific autonomous driving action, in other words, when sensing information of a sensor included in the sensing sector is used to execute the specific autonomous driving action, that is, when execution of the specific autonomous driving action needs to depend on the sensing information of the sensor in the sensing sector, if a confidence level (for example, the low level) of the sensing sector does not meet a preset condition, an execution strategy corresponding to the autonomous driving action includes prohibiting execution but allowing completion of execution of the autonomous driving action that has started, or prohibiting execution and disallowing completion of execution of the autonomous driving action that has started.

On the contrary, when sensing information of one sensing sector is not used to execute a specific autonomous driving action, if a confidence level (for example, the low level) of the sensing sector does not meet the preset condition, an execution strategy corresponding to the autonomous driving action is allowing execution of the autonomous driving action.

The left-front sensing sector is used as an example. Sensing information of the left-front sensing sector may be used to execute detouring to the left. As shown in FIG. 7, when a confidence level of the left-front sensing sector is the low level, an execution strategy corresponding to detouring to the left is prohibiting execution and disallowing completion of execution of the autonomous driving action that has started. The sensing information of the left-front sensing sector is not used to execute traffic light processing. As shown in FIG. 7, when the confidence level of the left-front sensing sector is the low level, an execution strategy corresponding to traffic light processing is allowing execution of the autonomous driving action.

The left-rear sensing sector is used as another example. Sensing information of the left-rear sensing sector may be used to execute merging in to the right. As shown in FIG. 7, when a confidence level of the left-rear sensing sector is the low level, an execution strategy corresponding to merging in to the right is prohibiting execution but allowing completion of execution of the autonomous driving action that has started. The sensing information of the left-rear sensing sector is not used to execute exiting to the left. As shown in FIG. 7, when the confidence level of the left-rear sensing sector is the low level, an execution strategy corresponding to exiting to the left is allowing execution of the autonomous driving action.

Based on this solution, when sensing information of one sensing sector is used to execute a specific autonomous driving action, if a confidence level of the sensing sector does not meet the preset condition, an execution strategy corresponding to the autonomous driving action is prohibiting execution but allowing completion of execution of the autonomous driving action that has started, or prohibiting execution and disallowing completion of execution of the autonomous driving action that has started. In other words, execution of the autonomous driving action is prohibited. In this way, execution of the autonomous driving action that depends on a sensing sector whose confidence level does not meet the preset condition is avoided, so that a case in which control rights of a vehicle are suddenly handed over to a driver at a risk moment at which the sensor is faulty can be avoided, and driving safety can be improved. In addition, an autonomous driving function of the vehicle can be kept at a high level to a greatest extent, to implement more comfortable autonomous driving experience.

Optionally, in this embodiment, an execution strategy corresponding to an autonomous driving action of a preset type may be prohibiting execution but allowing completion of execution of the autonomous driving action that has started. An execution strategy corresponding to an autonomous driving action that is not of the preset type may be prohibiting execution and disallowing completion of execution of the autonomous driving action that has started.

The front sensing sector is used as an example. The preset type may include but is not limited to one or more of the following: merging in to the left, merging in to the right, changing a lane to the left, changing a lane to the right, borrowing a left lane, borrowing a right lane, turning left at an intersection, turning right at an intersection, making a U-turn at an intersection, and the like.

Optionally, for different sensing sectors, preset types may be the same or may be different. FIG. 7 shows an example in which the preset types are different.

Based on this solution, the execution strategy corresponding to the autonomous driving action of the preset type is prohibiting execution but allowing completion of execution of the autonomous driving action that has started. In this way, after completion of execution of the autonomous driving action of the preset type, execution of the autonomous driving action is prohibited, so that execution of the autonomous driving action that depends on the sensing sector whose confidence level does not meet the preset condition can be avoided. In addition, a case in which the vehicle is left at a dangerous position due to sudden termination of the autonomous driving action can be further avoided, so that driving safety is further improved, and more comfortable autonomous driving experience is implemented.

The execution strategy corresponding to the autonomous driving action that is not of the preset type is prohibiting execution and disallowing completion of execution of the autonomous driving action that has started. In this way, the autonomous driving action is directly terminated, so that execution of the autonomous driving action that depends on the sensing sector whose confidence level does not meet the preset condition can be avoided early to a greatest extent, driving safety is further improved, and more comfortable autonomous driving experience is implemented.

It may be understood that the preset condition in this embodiment of this application may be that the confidence level is the high level, or may be that the confidence level is higher than the low level. If the confidence level of the sensing sector does not meet the preset condition, the confidence level of the sensing sector may be, for example, the low level or a medium level. The preset condition is not specifically limited in embodiments of this application.

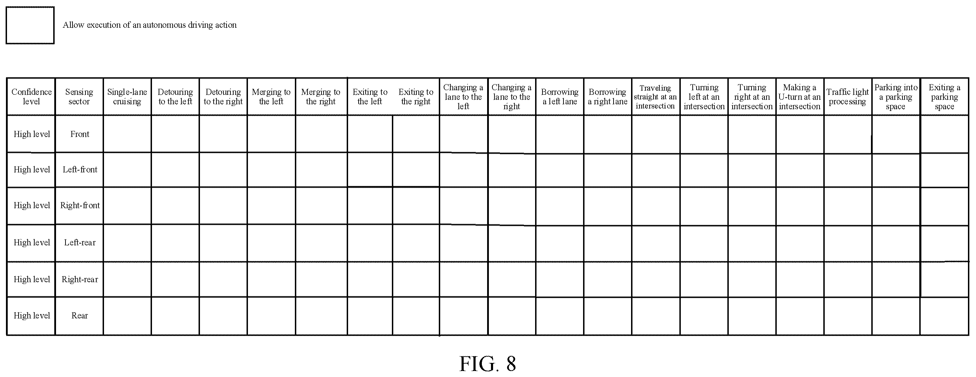

In some other embodiments, for example, the sensing sector includes a front sensing sector, a left-front sensing sector, a right-front sensing sector, a rear sensing sector, a left-rear sensing sector, and a right-rear sensing sector, and confidence levels of these sensing sectors are high levels. FIG. 8 shows another example of the mapping relationship.

As shown in FIG. 8, for example, the sensing sector is the front sensing sector. When a confidence level of the front sensing sector is the high level, an execution strategy corresponding to single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, exiting a parking space, or the like is allowing execution of the autonomous driving action.

As shown in FIG. 7 and FIG. 8, for a same sensing sector at different confidence levels, execution strategies corresponding to a same autonomous driving action may be different. The front sensing sector is used as an example. For exiting to the left, when the confidence level is a low level, the corresponding execution strategy is prohibiting execution and disallowing completion of execution of the autonomous driving action that has started; and when the confidence level is the high level, the corresponding execution strategy is allowing execution of the autonomous driving action.

S303: Execute the autonomous driving action according to the execution strategy.

Based on the foregoing technical solution, the confidence level of the sensing sector is determined based on the fault condition of the sensor included in the sensing sector, and the execution strategy corresponding to the autonomous driving action is determined based on the confidence level, to execute the autonomous driving action according to the execution strategy. Execution of the autonomous driving action that depends on the sensing sector whose confidence level does not meet the preset condition can be avoided, so that the case in which the control rights of the vehicle are suddenly handed over to the driver at the risk moment at which the sensor is faulty can be avoided, and driving safety can be improved. In addition, the autonomous driving function of the vehicle can be kept at a high level to a greatest extent, and duration for which the vehicle is in autonomous driving work is prolonged, to implement more comfortable autonomous driving experience.

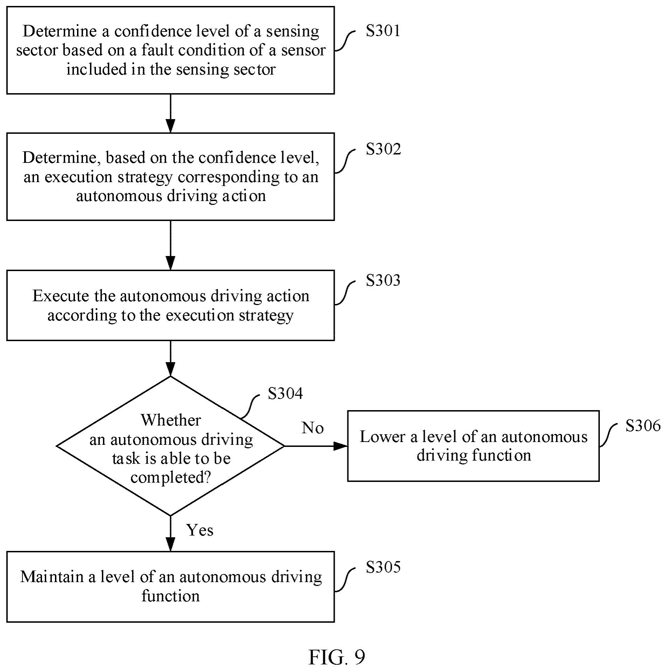

In some embodiments, as shown in FIG. 9, after step S303, the steps shown in FIG. 3 may further include step S304 to step S306.

S304: Determine whether an autonomous driving task is able to be completed.

If the autonomous driving task is able to be completed, step S305 is performed. If the autonomous driving task is unable to be completed, step S306 is performed.

For example, the autonomous driving task may be a traveling task, for example, traveling from a place A to a place B. Alternatively, the autonomous driving task may be a parking task, or may be another task related to autonomous driving. This is not specifically limited in this application.

S305: Maintain a level of the autonomous driving function.

For example, the level of the autonomous driving function may include but is not limited to one or more of the following: no automation (L0 level), driving support (L1 level), assisted driving (L2 level), conditional automation (L3 level), high automation (L4 level), full automation (L5 level), and the like.

S306: Lower a level of an autonomous driving function.

Optionally, for different sensing sectors, lowered levels of the autonomous driving function may be the same or may be different.

For example, lowering the level of the autonomous driving function may include but is not limited to one or more of the following: exiting an autonomous driving mode, entering an adaptive cruise control (ACC) mode, lowering the level to any level lower than a current level, and the like.

It may be understood that, after the level of the autonomous driving function is lowered, the driver needs to participate more in controlling the vehicle.

Optionally, when execution of a specific autonomous driving operation is prohibited and/or the level of the autonomous driving function is lowered, a reminder message may be further output to remind a user.

Based on the foregoing technical solution, after the autonomous driving action is executed according to the execution strategy, if it is determined that the autonomous driving task is unable to be completed, the level of the autonomous driving function is lowered; otherwise, the level of the autonomous driving function is maintained. In this way, the autonomous driving function of the vehicle can be kept at a high level to a greatest extent, to implement more comfortable autonomous driving experience.

The following describes the intelligent driving method provided in embodiments of this application with reference to several specific scenarios.

In some scenarios, in a process in which a vehicle executes autonomous driving and travels straight, a visual sensor located in a right-rear sensing sector is faulty. If it is determined that a confidence level of the right-rear sensing sector does not meet a preset condition, an execution strategy corresponding to changing a lane to the right is prohibiting execution of the autonomous driving action, that is, prohibiting changing a lane to the right.

In some other scenarios, in a process in which the vehicle executes autonomous driving and changes a lane to the right, the visual sensor located in the right-rear sensing sector is faulty. If it is determined that the confidence level of the right-rear sensing sector does not meet the preset condition, the execution strategy corresponding to changing a lane to the right is prohibiting execution but allowing completion of execution of an autonomous driving action that has started. That is, after changing a lane to the right is completed, changing a lane to the right is prohibited from being executed again.

Optionally, in the foregoing scenario, if it is determined that the autonomous driving task is able to be completed without execution of changing a lane to the right, the level of the autonomous driving function is maintained. If it is determined that the autonomous driving task is unable to be completed without execution of changing a lane to the right, the level of the autonomous driving function is lowered.

On the contrary, in the foregoing scenario, if it is determined that the confidence level of the right-rear sensing sector meets the preset condition, it is determined that an execution strategy corresponding to each autonomous driving action is allowing execution of the autonomous driving action.

In still another scenario, in a process in which the vehicle executes autonomous driving and travels straight, a visual sensor, a lidar, and/or the like located in a front sensing sector are/is faulty. If it is determined that a confidence level of the front sensing sector meets the preset condition, the execution strategy corresponding to each autonomous driving action is allowing execution of the autonomous driving action.

Optionally, in this case, the level of the autonomous driving function may be maintained, or the level of the autonomous driving function may be changed (for example, raised or lowered). This is not limited in this application.

On the contrary, if it is determined that the confidence level of the front sensing sector does not meet the preset condition, the execution strategy corresponding to each autonomous driving action is prohibiting execution of the autonomous driving action.

Optionally, in this case, the level of the autonomous driving function may be lowered.

The foregoing mainly describes the solutions provided in embodiments of this application from the perspective of the methods. It may be understood that, to implement the foregoing functions, the intelligent driving apparatus includes a corresponding hardware structure and/or software module for performing each function. Units and algorithm steps of the examples described with reference to embodiments disclosed in this application may be implemented by hardware or a combination of hardware and computer software in embodiments of this application. Whether a function is performed by hardware or hardware driven by a computer depends on particular applications and design constraints of the technical solutions. A person skilled in the art may use different methods to implement the described functions for each particular application, but it should not be considered that the implementation falls beyond the scope of the technical solutions in embodiments of this application.

In embodiments of this application, the intelligent driving apparatus may be divided into functional modules based on the foregoing method examples. For example, functional modules may be obtained through division based on corresponding functions, or two or more functions may be integrated into one processing unit. The integrated unit may be implemented in a form of hardware, or may be implemented in a form of software functional module. It should be noted that, division of units in this embodiment of this application is merely an example, and is only division of logical functions. Another division manner may be available in actual implementation.

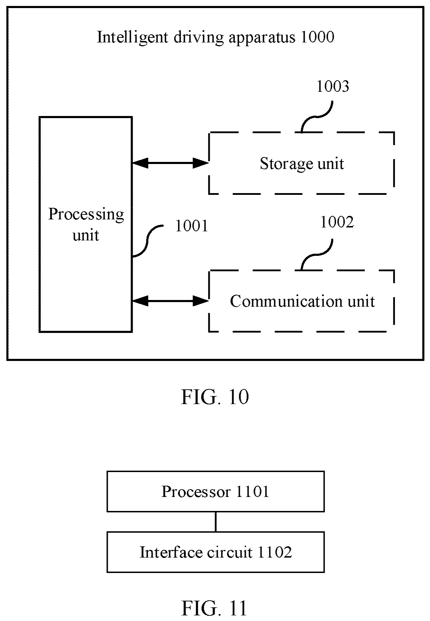

FIG. 10 is a diagram of a structure of an intelligent driving apparatus according to an embodiment of this application. The intelligent driving apparatus may be configured to implement the methods recorded in the foregoing method embodiments. Optionally, the intelligent driving apparatus may be the target device described above, or may be a module (for example, a chip) used in the target device. For example, the intelligent driving apparatus 1000 may specifically include a processing unit 1001.

The processing unit 1001 is configured to support the intelligent driving apparatus 1000 in performing step S301 to step S303 in FIG. 3; and/or the processing unit 1001 is further configured to support the intelligent driving apparatus 1000 in performing step S301 to step S306 in FIG. 9; and/or the processing unit 1001 is further configured to support the intelligent driving apparatus 1000 in performing other steps performed by the target device in embodiments of this application.

Optionally, the intelligent driving apparatus 1000 shown in FIG. 10 may further include a communication unit 1002. The communication unit 1002 is configured to support the intelligent driving apparatus 1000 in performing the step of communication between the intelligent driving apparatus and another device in embodiments of this application.

Optionally, the intelligent driving apparatus 1000 shown in FIG. 10 may further include a storage unit 1003, and the storage unit 1003 stores a program or instructions. When the processing unit 1001 executes the program or the instructions, the intelligent driving apparatus 1000 shown in FIG. 10 is enabled to perform the methods in the foregoing method embodiments.

For technical effect of the intelligent driving apparatus 1000 shown in FIG. 10, refer to the technical effect described in the foregoing method embodiments. Details are not described herein again. The processing unit 1001 in the intelligent driving apparatus 1000 shown in FIG. 10 may be implemented by a processor or a processor-related circuit component, and may be a processor or a processing module. The communication unit 1002 may be implemented by a transceiver or a transceiver-related circuit component, and may be a transceiver or a transceiver module.

An embodiment of this application further provides a chip system. As shown in FIG. 11, the chip system includes at least one processor 1101 and at least one interface circuit 1102. The processor 1101 and the interface circuit 1102 may be interconnected through a line. For example, the interface circuit 1102 may be configured to receive a signal from another apparatus. For another example, the interface circuit 1102 may be configured to send a signal to the another apparatus (for example, the processor 1101). For example, the interface circuit 1102 may read instructions stored in a memory, and send the instructions to the processor 1101. When the instructions are executed by the processor 1101, the intelligent driving apparatus may be enabled to perform the steps in the foregoing method embodiments. Certainly, the chip system may further include another discrete device. This is not specifically limited in embodiments of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system-on-chip (SoC), a CPU, a network processor (NP), a DSP, an MCU, a programmable logic controller (PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on an intelligent driving apparatus, the intelligent driving apparatus is enabled to perform the methods in the foregoing method embodiments.

An embodiment of this application provides a computer program product. The computer program product includes a computer program or instructions. When the computer program or the instructions are run on a computer, the computer is enabled to perform the methods in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the methods in the foregoing method embodiments.

The intelligent driving apparatus, the computer storage medium, the computer program product, or the chip provided in embodiments is configured to perform the corresponding method provided above. Therefore, for beneficial effect that can be achieved by the intelligent driving apparatus, the computer storage medium, the computer program product, or the chip, refer to beneficial effect of the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus and method may be implemented in other manners. Embodiments may be combined or referenced with each other without conflict. The described apparatus embodiments are merely examples. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An intelligent driving method, wherein the method comprises:
determining a confidence level of a sensing sector based on a fault condition of a sensor comprised in the sensing sector;
determining, based on the confidence level, an execution strategy corresponding to an autonomous driving action; and
executing the autonomous driving action according to the execution strategy.

2. The method according to claim 1, wherein before the determining a confidence level of a sensing sector based on a fault condition of a sensor comprised in the sensing sector, the method further comprises:
obtaining at least one sensing sector through division according to a sensing orientation of at least one sensor.

3. The method according to claim 1 or 2, wherein the sensing sector comprises one or more of the following: a front sensing sector, a left-front sensing sector, a right-front sensing sector, a rear sensing sector, a left-rear sensing sector, and a right-rear sensing sector.

4. The method according to any one of claims 1 to 3, wherein the execution strategy comprises one or more of the following: allowing execution of the autonomous driving action, prohibiting execution but allowing completion of execution of an autonomous driving action that has started, and prohibiting execution and disallowing completion of execution of the autonomous driving action that has started.

5. The method according to claim 4, wherein sensing information of the sensor comprised in the sensing sector is used to execute the autonomous driving action; and
the determining, based on the confidence level, an execution strategy corresponding to an autonomous driving action comprises:
if the confidence level does not meet a preset condition, the execution strategy corresponding to the autonomous driving action comprises: prohibiting execution but allowing completion of execution of the autonomous driving action that has started, or prohibiting execution and disallowing completion of execution of the autonomous driving action that has started.

6. The method according to any one of claims 1 to 5, wherein the autonomous driving action comprises one or more of the following: single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, and exiting a parking space.

7. The method according to claim 6, wherein the sensing sector is the front sensing sector; and
the determining, based on the confidence level, an execution strategy corresponding to an autonomous driving action comprises:
if the confidence level does not meet the preset condition, an execution strategy corresponding to single-lane cruising, detouring to the left, detouring to the right, exiting to the left, exiting to the right, traveling straight at an intersection, parking into a parking space, or exiting a parking space is: prohibiting execution and disallowing completion of execution of the autonomous driving action that has started; an execution strategy corresponding to merging in to the left, merging in to the right, changing a lane to the left, changing a lane to the right, borrowing a left lane, borrowing a right lane, turning left at an intersection, turning right at an intersection, or making a U-turn at an intersection is: prohibiting execution but allowing completion of execution of the autonomous driving action that has started.

8. The method according to any one of claims 3 to 7, wherein the sensing sector is the right-rear sensing sector; and
the determining a confidence level of a sensing sector based on a fault condition of a sensor comprised in the sensing sector comprises:
in a case in which a right-rear visual sensor is faulty, determining that a confidence level of the right-rear sensing sector does not meet the preset condition, wherein the right-rear visual sensor is a sensor comprised in the right-rear sensing sector.

9. The method according to claim 8, wherein the autonomous driving action comprises changing a lane to the right, and the execution strategy comprises: prohibiting execution but allowing completion of execution of the autonomous driving action that has started.

10. The method according to any one of claims 1 to 9, wherein the sensor comprises one or more of the following: a camera, a millimeter-wave radar, an ultrasonic radar, and a lidar.

11. The method according to any one of claims 1 to 10, wherein after the executing the autonomous driving action according to the execution strategy, the method further comprises:
if it is determined that an autonomous driving task is unable to be completed, lowering a level of an autonomous driving function.

12. The method according to any one of claims 1 to 10, wherein after the executing the autonomous driving action according to the execution strategy, the method further comprises:
if it is determined that an autonomous driving task is able to be completed, maintaining a level of an autonomous driving function.

13. An intelligent driving apparatus, comprising a processing unit, wherein the processing unit is configured to:
determine a confidence level of a sensing sector based on a fault condition of a sensor comprised in the sensing sector;
determine, based on the confidence level, an execution strategy corresponding to an autonomous driving action; and
execute the autonomous driving action according to the execution strategy.

14. The apparatus according to claim 13, wherein
the processing unit is further configured to obtain at least one sensing sector through division based on a sensing orientation of at least one sensor.

15. The apparatus according to claim 13 or 14, wherein the sensing sector comprises one or more of the following: a front sensing sector, a left-front sensing sector, a right-front sensing sector, a rear sensing sector, a left-rear sensing sector, and a right-rear sensing sector.

16. The apparatus according to any one of claims 13 to 15, wherein the execution strategy comprises one or more of the following: allowing execution of the autonomous driving action, prohibiting execution but allowing completion of execution of an autonomous driving action that has started, and prohibiting execution and disallowing completion of execution of the autonomous driving action that has started.

17. The apparatus according to claim 16, wherein sensing information of the sensor comprised in the sensing sector is used to execute the autonomous driving action; and
the processing unit is specifically configured to: if the confidence level does not meet a preset condition, determine that the execution strategy corresponding to the autonomous driving action comprises prohibiting execution but allowing completion of execution of the autonomous driving action that has started, or prohibiting execution and disallowing completion of execution of the autonomous driving action that has started.

18. The apparatus according to any one of claims 13 to 17, wherein the autonomous driving action comprises one or more of the following: single-lane cruising, detouring to the left, detouring to the right, exiting to the left, exiting to the right, merging in to the left, merging in to the right, changing a lane to the left, changing a lane to the right, borrowing a left lane, borrowing a right lane, traveling straight at an intersection, turning left at an intersection, turning right at an intersection, making a U-turn at an intersection, parking into a parking space, and exiting a parking space.

19. The apparatus according to claim 18, wherein the sensing sector is the front sensing sector; and
the processing unit is specifically configured to: if the confidence level does not meet the preset condition, determine that an execution strategy corresponding to single-lane cruising, detouring to the left, detouring to the right, exiting to the left, exiting to the right, traveling straight at an intersection, parking into a parking space, or exiting a parking space is: prohibiting execution and disallowing completion of execution of the autonomous driving action that has started; an execution strategy corresponding to merging in to the left, merging in to the right, changing a lane to the left, changing a lane to the right, borrowing a left lane, borrowing a right lane, turning left at an intersection, turning right at an intersection, or making a U-turn at an intersection is: prohibiting execution but allowing completion of execution of the autonomous driving action that has started.

20. The apparatus according to any one of claims 15 to 19, wherein the sensing sector is the right-rear sensing sector; and
the processing unit is specifically configured to: in a case in which a right-rear visual sensor is faulty, determine that a confidence level of the right-rear sensing sector does not meet the preset condition, wherein the right-rear visual sensor is a sensor comprised in the right-rear sensing sector.

21. The apparatus according to claim 20, wherein the autonomous driving action comprises changing a lane to the right, and the execution strategy comprises prohibiting execution but allowing completion of execution of the autonomous driving action that has started.

22. The apparatus according to any one of claims 13 to 21, wherein the sensor comprises one or more of the following: a camera, a lidar, a millimeter-wave radar, and an ultrasonic radar.

23. The apparatus according to any one of claims 13 to 22, wherein
the processing unit is further configured to: if it is determined that an autonomous driving task is unable to be completed, lower a level of an autonomous driving function.

24. The apparatus according to any one of claims 13 to 22, wherein
the processing unit is further configured to: if it is determined that an autonomous driving task is able to be completed, maintain a level of an autonomous driving function.

25. An intelligent driving apparatus, comprising a processor, wherein the processor is coupled to a memory; and the processor is configured to execute a computer program stored in the memory, to enable the intelligent driving apparatus to perform the method according to any one of claims 1 to 12.

26. A computer-readable storage medium, wherein the computer-readable storage medium comprises a computer program or instructions; and when the computer program or the instructions are run on an intelligent driving apparatus, the intelligent driving apparatus is enabled to perform the method according to any one of claims 1 to 12.

27. A computer program product, wherein the computer program product comprises a computer program or instructions; and when the computer program or the instructions are run on a computer, the computer is enabled to perform the method according to any one of claims 1 to 12.
